# EUROPEAN PATENT APPLICATION

(11) **EP 4 474 493 A1**
(43) Date of publication of application: **11.12.2024**
(21) Application number: 23770808.6
(22) Date of filing: 14.03.2023
(51) Int. Cl.: C21D 8/12, C21D 9/46, C22C 38/00, C22C 38/60, H01F 1/147

(54) **GRAIN-ORIENTED ELECTROMAGNETIC STEEL SHEET AND METHOD FOR MANUFACTURING SAME**

(30) Priority: 14.03.2022 JP 2022039663
(71) Applicant: JFE Steel Corporation, Tokyo 100-0011 (JP)
(72) Inventor: SHINGAKI Yukihiro, Tokyo 100-0011 (JP); WATANABE Makoto, Tokyo 100-0011 (JP); YAMADA Takuya, Tokyo 100-0011 (JP)
(74) Representative: Hoffmann Eitle
(86) International application number: PCT/JP2023/009952
(87) International publication number: WO 2023/176855

(57) **Abstract**

According to the present disclosure, a grain-oriented electrical steel sheet is obtainable that includes a forsterite film having high separation resistance with respect to smaller bending radius processing, even with an inhibitor-less chemical composition, due to the steel sheet containing a defined chemical composition and by making one or both peaks of Ti and Nb intensity, obtained by GDS analysis, be on a steel substrate side of a 1/2 position of thickness of the forsterite film.

## Description

### TECHNICAL FIELD

The present disclosure relates to a grain-oriented electrical steel sheet having extremely high resistance to film separation of forsterite film from a surface of the steel sheet, and a method of producing same.

### BACKGROUND

In recent years, grain-oriented electrical steel sheets directed toward lower costs have been developed, and as one way to lower costs, a technique to develop secondary recrystallization without inhibitor components in a slab has been studied. In Patent Literature (PTL) 1, a technique is described by which secondary recrystallization can be achieved without any inhibitor component being included (an inhibitor-less method).

The inhibitor-less method is a technique to use a highly purified steel and to cause secondary recrystallization by controlling the texture of the steel.

Typically, a grain-oriented electrical steel sheet is produced by applying a coating solution mainly composed of phosphate over a film mainly composed of Mg, Si, and O, called forsterite, on a steel substrate, and then baking to form an insulating coating.

However, material not containing any inhibitor-forming component has a problem in that an oxide film formed during primary recrystallization annealing becomes dendrite-like, resulting in deterioration of the forsterite film.

Here, the strengthening of the steel substrate-forsterite film interface is extremely effective in increasing separation resistance.

For example, as described in PTL 2, a technique has been developed to appropriately change the structure of the oxide film formed during primary recrystallization annealing by controlling the material composition of the oxide film, even when no inhibitor is used, to form a forsterite film having excellent adhesion and excellent separation resistance after secondary recrystallization.

Further, grain-oriented electrical steel sheets are typically a material mainly used in transformer iron cores. Transformers use either a stacked iron core, in which cut steel sheets are stacked on top of each other to form an iron core, or a wound iron core, in which steel sheets are bent to form an iron core.

A wound iron core is formed by bending steel sheets into a core shape, and therefore a film that provides insulation to the grain-oriented electrical steel sheet is required to have separation resistance when bent. In particular, as some transformers have become more compact, there is a need for films that do not separate even when processed with even smaller bending diameters.

### CITATION LIST

### Patent Literature

PTL 1: JP 2000-129356 A
PTL 2: JP 2003-193134 A

### SUMMARY

### (Technical Problem)

However, in the production of a grain-oriented electrical steel sheet containing little Se or S, as described in PTL 1, the oxide film formed during primary recrystallization annealing tends to become dendrite-like, and due to this effect, there is still a problem with insufficient separation resistance of the forsterite film after secondary recrystallization.

Further, although improvement methods such as those described in PTL 2 have been proposed, required separation resistance has further increased with the recent trend toward smaller diameter wound iron cores. Therefore, cases have been confirmed where such conventional methods still do not provide sufficient separation resistance for recent processing with smaller bending diameters, as described above.

Accordingly, it would be helpful to provide a grain-oriented electrical steel sheet including a forsterite film having high separation resistance applicable to processing with smaller bending diameters, even with an inhibitor-less chemical composition in which Al is controlled to less than 100 ppm and each of S, Se, and N are controlled to 50 ppm or less, and a method of production advantageous for forming the forsterite film.

### (Solution to Problem)

An anchoring effect due to irregularity of a forsterite-steel substrate interface is known to be extremely important for the separation resistance of forsterite film. The inventors have made extensive studies of methods to further enhance the anchoring effect, in addition to the irregular shape formed by forsterite. As a result, the inventors arrived at the following discoveries.

A method is to precipitate Ti and Nb to form wedges (anchors) with respect to the forsterite and the steel substrate, thereby further increasing bonding strength between the forsterite and the steel substrate.

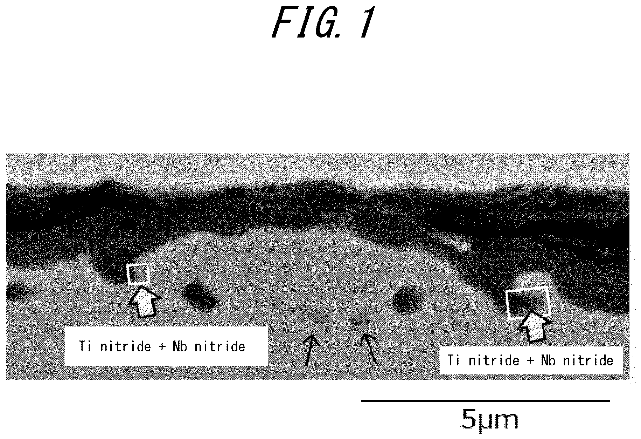

Here, FIG. 1 is a scanning electron microscope (SEM) image of the surface of a steel sheet that actually had extremely high separation resistance, and there are portions of the forsterite film that appear bent like a key (inside the rectangular frames). Further investigation of the irregularly bent portions revealed that the portions are formed by Ti and Nb nitrides.

Further, in the central portion of the image of the steel sheet cross-section in FIG. 1 (indicated by arrows), Ti and Nb are also observed precipitating within the steel substrate rather than at the interface.

Further extensive studies by the inventors have found that appropriately controlling these factors increases adhesion between the forsterite film and the steel substrate and further improves separation resistance.

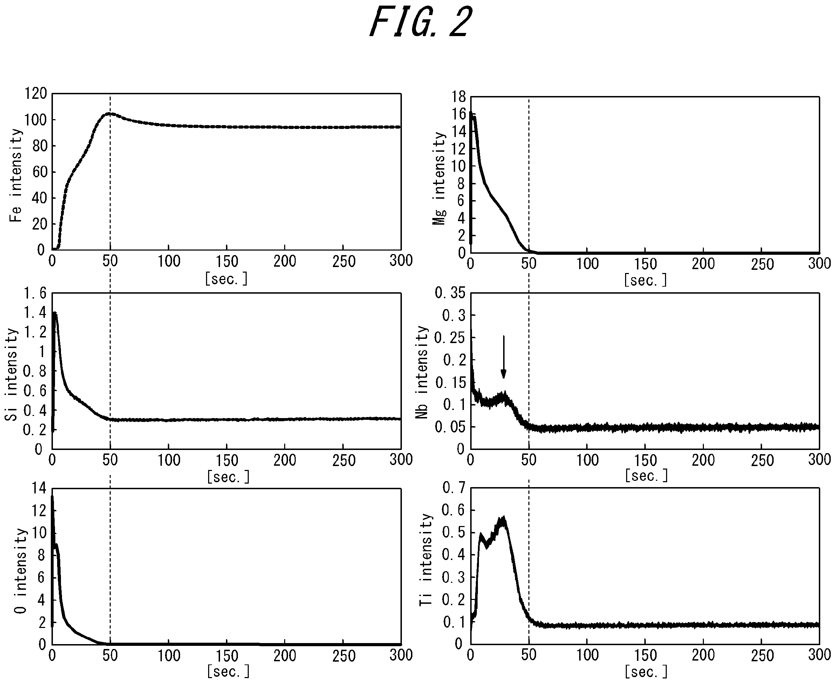

In steel sheets appropriately controlled as described, when peak positions of Ti and Nb intensities were confirmed using glow discharge spectrometry (GDS) analysis, where forsterite film thickness was determined by intensity change of Mg, Si, and O (the dotted line in FIG. 2; hereinafter also referred to as forsterite film thickness), it was found that the peak positions of Ti and Nb intensities were obtained on the steel substrate side of a 1/2 position of the forsterite film thickness (hereinafter also referred to as simply 1/2 thickness). Further, the peak position of the Ti intensity and the peak position of the Nb intensity were close to each other with ±10 % precision, based on forsterite film thickness.

The present disclosure is based on the discoveries described above and further studies. Primary features of the present disclosure are as follows.
1. A grain-oriented electrical steel sheet comprising a steel substrate and a forsterite film, wherein the steel substrate has a chemical composition comprising (consisting of), in mass%, C: 0.005 % or less, Si: 2.00 % to 4.50 %, and Mn: 0.01 % to 0.50 %, less than 50 mass ppm of each of Se and O, less than 30 mass ppm of S, 10 mass ppm or more and less than 60 mass ppm of acid soluble Al, and 30 mass ppm or less of either or each of Nb and Ti, with the balance being Fe and inevitable impurity, the steel sheet has a magnetic flux density B₈ of 1.900 T or more, and peaks of one or both of Ti intensity and Nb intensity according to GDS analysis are on a steel substrate side of a 1/2 position of thickness of the forsterite film.
2. A grain-oriented electrical steel sheet comprising a steel substrate and a forsterite film, wherein the steel substrate has a chemical composition comprising (consisting of), in mass%, C: 0.005 % or less, Si: 2.00 % to 4.50 %, and Mn: 0.01 % to 0.50 %, less than 50 mass ppm of each of Se and O, less than 30 mass ppm of S, 10 mass ppm or more and less than 60 mass ppm of acid soluble Al, and 30 mass ppm or less of each of Nb and Ti, with the balance being Fe and inevitable impurity, the steel sheet has a magnetic flux density B₈ of 1.900 T or more, peaks of Ti intensity and Nb intensity according to GDS analysis are on a steel substrate side of a 1/2 position of thickness of the forsterite film, and the peak position of the Ti intensity and the peak position of the Nb intensity are close to each other with ±10 % precision, based on forsterite film thickness.
3. The grain-oriented electrical steel sheet according to 1 or 2, above, wherein the chemical composition further contains, in mass%, at least one selected from the group consisting of Ni: 1.500 % or less, Sn: 0.50 % or less, Sb: 0.500 % or less, Zn: 0.5000 % or less, Co: 0.0100 % or less, Ga: 0.0050 % or less, Ge: 0.0050 % or less, Cu: 0.50 % or less, Mo: 0.50 % or less, P: 0.500 % or less, Cr: 1.50 % or less, B: 0.0050 % or less, and Bi: 0.0050 % or less.
4. A method of producing the grain-oriented electrical steel sheet as recited in 1, above, the method comprising: casting a steel slab from molten steel, the steel slab having a chemical composition comprising, in mass%, C: 0.08 % or less, Si: 2.00 % to 4.50 %, and Mn: 0.01 % to 0.50 %, and, in mass ppm, either or each of Ti and Nb: 10 ppm or more and less than 150 ppm, each of O and Se: less than 50 ppm, S: 10 ppm or more and less than 50 ppm, acid soluble Al: 20 ppm or more and less than 100 ppm, and N: 20 ppm or more and 80 ppm or less, with the balance being Fe and inevitable impurity; hot rolling the steel slab to obtain a hot-rolled sheet; then annealing and rolling to a final sheet thickness to obtain a cold-rolled sheet; then primary recrystallization annealing; then further final annealing; followed by forming an insulating coating, wherein the final annealing has a maximum temperature of 1180 °C or more and includes a final annealing process and a cooling process, and in the final annealing process, at least 2 h from 1050 °C to 1150 °C is carried out in an atmosphere of H₂: 50 vol% or more at a heating rate of 10 °C/h or more, and at least 1 h from 1100 °C to 1150 °C is carried out in an atmosphere of N₂: 10 vol% or more, followed by soaking treatment at the maximum temperature for 3 h or more, and at least once in the cooling process in a temperature range of 1100 °C or less to 900 °C or more, slow cooling is carried out at a cooling rate of 15 °C/h or less for 5 h or more in an atmosphere of N₂: 50 vol% or more.
5. A method of producing the grain-oriented electrical steel sheet as recited in 2, above, the method comprising: casting a steel slab from molten steel, the steel slab having a chemical composition comprising, in mass%, C: 0.08 % or less, Si: 2.00 % to 4.50 %, and Mn: 0.01 % to 0.50 %, and, in mass ppm, each of Ti and Nb: 10 ppm or more and less than 150 ppm, each of O and Se: less than 50 ppm, S: 10 ppm or more and less than 50 ppm, acid soluble Al: 20 ppm or more and less than 100 ppm, and N: 20 ppm or more and 80 ppm or less, with the balance being Fe and inevitable impurity; hot rolling the steel slab to obtain a hot-rolled sheet; then annealing and rolling to a final sheet thickness to obtain a cold-rolled sheet; then primary recrystallization annealing; then further final annealing; followed by forming an insulating coating, wherein the final annealing has a maximum temperature of 1180 °C or more and includes a final annealing process and a cooling process, and in the final annealing process, at least 2 h from 1050 °C to 1150 °C is carried out in an atmosphere of H₂: 50 vol% or more at a heating rate of 10 °C/h or more, and at least 1 h from 1100 °C to 1150 °C is carried out in an atmosphere of N₂: 10 vol% or more, followed by soaking treatment at the maximum temperature for 3 h or more, and at least once in the cooling process in a temperature range of 1100 °C or less to 900 °C or more, slow cooling is carried out at a cooling rate of 15 °C/h or less for 5 h or more in an atmosphere of N₂: 50 vol% or more.
6. The method according to 4 or 5, above, of producing the grain-oriented electrical steel sheet as recited in 3, above, wherein the chemical composition of the steel slab as recited in 4 or 5, above, further contains, in mass%, at least one selected from the group consisting of Ni: 0.005 % to 1.500 %, Sn: 0.01 % to 0.50 %, Sb: 0.005 % to 0.500 %, Zn: 0.0001 % to 0.5000 %, Co: 0.0001 % to 0.0100 %, Ga: 0.0001 % to 0.0050 %, Ge: 0.0001 % to 0.0050 %, Cu: 0.01 % to 0.50 %, Mo: 0.01 % to 0.50%, P: 0.005 % to 0.500 %, Cr: 0.01 % to 1.50 %, B: 0.0001 % to 0.0050 %, and Bi: 0.0001 % to 0.0050 %.
7. The method according to any one of 4 to 6, above, of producing the grain-oriented electrical steel sheet, wherein additional soaking treatment at a cooling rate of 5 °C/h or less is performed in an atmosphere of N₂: 50 vol% or more in the temperature range of 1100 °C or less to 900 °C or more in the cooling process.

### (Advantageous Effect)

According to the present disclosure, a grain-oriented electrical steel sheet may be produced that has good film adhesion applicable to processing with small bending diameters, using a chemical composition that contains almost no inhibitor.

### BRIEF DESCRIPTION OF THE DRAWINGS

In the accompanying drawings:
FIG. 1 is an SEM image of a steel sheet surface; and
FIG. 2 is a diagram illustrating intensities of Fe, Mg, Si, O, Ti, and Nb using GDS analysis.

### DETAILED DESCRIPTION

The present disclosure is described in detail below.

First, the ranges of chemical composition of a steel slab according to the present disclosure and the reasons for limiting the chemical composition to the ranges are described. Hereinafter, "%" for chemical composition in steel slabs and steel sheets (steel substrate) means mass% unless otherwise specified, and "ppm" means mass ppm unless otherwise specified.

### C: 0.08 % or less

C has functions of inhibiting crystal grain coarsening during hot rolling and improving texture prior to cold rolling. Further, in cold rolling, C functions to improve texture after primary recrystallization through interaction with dislocations. However, when remaining in a steel sheet after final annealing, C causes magnetic aging and magnetic deterioration. That is, when content exceeds 0.08 %, the load becomes higher in an intermediate decarburization process and cannot be reduced to 0.005 % or less in the steel sheet. According to the present disclosure, the C content is therefore limited to 0.08 % or less. Further, to obtain the texture improving effect, a lower limit of the C content is preferably 0.01 %.

### Si: 2.00 % to 4.50 %

Si is a useful element that reduces iron loss by increasing electrical resistance. When content is less than 2.00 %, sufficient iron loss reduction cannot be expected, and when the content exceeds 4.50 %, cold rolling becomes significantly more difficult. The Si content is therefore in a range of 2.00 % or more to 4.50 % or less.

### Mn: 0.01 % to 0.50 %

Mn is a useful element to improve hot workability. However, when Mn content exceeds 0.50 %, primary recrystallized texture deteriorates and it becomes difficult to obtain secondary recrystallized grains that are highly accorded with Goss orientation. Mn is therefore limited to 0.50 % or less. To improve hot workability, Mn content of 0.01 % or more is required.

### Each of Se and O: less than 50 ppm

An excess of Se forms Se compounds, making secondary recrystallization difficult. The reason for this is that precipitates coarsened by slab heating act as an inhibitor and make the primary recrystallized texture non-uniform. Therefore, to not act as an inhibitor, Se is suppressed to less than 50 ppm. Preferred content is 30 ppm or less.

Further, O forms oxides that remain as inclusions in the final product, degrading magnetic properties. Therefore, O needs to be suppressed to less than 50 ppm.

The content of these elements may be 0 %.

### Acid soluble Al: 20 ppm or more and less than 100 ppm, S: 10 ppm or more and less than 50 ppm, N: 20 ppm or more and 80 ppm or less

When an inhibitor-less method is applied, these precipitate-forming elements are not necessary when only secondary recrystallization is considered. However, by including an appropriate amount of Al, a dense Al₂O₃ film can be formed on the surface during the final annealing, reducing the effects of nitridation and the like from the annealing atmosphere. Al content is therefore in a range of 20 ppm or more to less than 100 ppm.

Further, when S content is 50 ppm or more or when N content is more than 80 ppm, then as with Se, precipitates formed during slab heating become coarse and deteriorate the primary recrystallized texture. Upper limits are therefore limited to the values mentioned above. A lower limit of the amount added of each of S and N is preferably 0 %. However, these elements are difficult to completely eliminate, and actually reducing S to less than 10 ppm and N to less than 20 ppm significantly increases production costs. The inhibitor-less method is intended to produce a high-quality grain-oriented electrical steel sheet at low cost, and from the viewpoint of reducing the burden during production, S: 10 ppm and N: 20 ppm are specified as lower limits.

### Nb: 10 ppm or more and less than 150 ppm, Ti: 10 ppm or more and less than 150 ppm

According to the present disclosure, Nb and Ti form to act as wedges with respect to the steel substrate-forsterite film interface to increase the separation resistance of the forsterite film. To achieve this, Nb and Ti content each needs to be 10 ppm or more at the steelmaking process stage. When less than 10 ppm, the number of precipitates formed is not sufficient, and the role as wedges cannot be fully fulfilled. On the other hand, when either content is 150 ppm or more, the element cannot be in solid solution state during the final annealing, and therefore diffusion to the interface does not occur and the role as wedges at the steel substrate-forsterite film interface cannot be fulfilled. Nb and Ti therefore each need to be less than 150 ppm. The lower limit of each is preferably 10 ppm. The upper limit of each is preferably 80 ppm.

Although the required elements and suppressed elements have been described above, according to the present disclosure, one or more of the other elements described below may be included as appropriate.

### Ni: 0.005 % to 1.500 %

Ni serves to increase uniformity of the texture of the hot-rolled sheet, and thus improve magnetic properties. However, when content is less than 0.005 %, the effect of addition is poor. On the other hand, when the Ni content exceeds 1.500 %, secondary recrystallization becomes unstable and magnetic properties deteriorate. The Ni content is therefore preferably in the range of 0.005 % to 1.500 %.

### Sn: 0.01 % to 0.50 %, Sb: 0.005 % to 0.500 %, Zn: 0.0001 % to 0.5000 %, Co: 0.0001 % to 0.0100 %, Ga: 0.0001 % to 0.0050 %, Ge: 0.0001 % to 0.0050 %, and Cu: 0.01 % to 0.50 %

These elements are sometimes regarded as auxiliary inhibitors via grain boundary segregation, but in the inhibitor-less method, which does not actively use inhibitors due to precipitates, these elements may be useful in slightly suppressing grain growth before secondary recrystallization and controlling the mobility of the secondary recrystallized grain boundaries via segregation during secondary recrystallization, thereby facilitating secondary recrystallization. When content is less than the lower limit, the effect of addition is poor, and when content exceeds the upper limit, the possibility of poor secondary recrystallization increases.

### P: 0.005 % to 0.500 % and Cr: 0.01 % to 1.50 %

These elements have an effect of improving the reaction during forsterite film formation. When content is less than the lower limit, the effect of addition is poor, and when content exceeds the upper limit, the formation of the forsterite film is promoted too much, causing problems such as separation of the film.

### Mo: 0.01 % to 0.50 %, B: 0.0001 % to 0.0050 %, and Bi: 0.0001 % to 0.0050 %

Each of these elements contributes to the suppression of grain growth and has an effect of improving texture and stabilizing secondary recrystallization. In order to efficiently obtain these effects, content in the above ranges is preferred. When added in excess, the added element precipitates in steel and acts as a strong inhibitor. Therefore, content in excess of the upper limit is not desirable in the inhibitor-less method.

The grain-oriented electrical steel sheet according to the present disclosure includes the steel substrate and the forsterite film. The steel substrate has a chemical composition including C: 0.005 % or less, Si: 2.00 % to 4.50 %, Mn: 0.01 % to 0.50 %, and less than 50 ppm of each of Se and O, less than 30 ppm of S, 10 ppm or more and less than 60 ppm of acid soluble Al, and 30 ppm or less of either or each of Nb and Ti, with the balance being Fe and inevitable impurity. The steel sheet has a magnetic flux density B₈ of 1.900 T or more. Further, when GDS analysis is performed on a cross-section of the steel sheet including the steel substrate and the forsterite film, one or both of a Ti intensity peak and a Nb intensity peak obtained are on the steel substrate side of 1/2 thickness of the forsterite film.

The thickness of the forsterite film according to the present disclosure is preferably determined by an intensity change of at least one of Mg, Si, or O. Further, the closer one or both of the Ti and Nb intensity peaks are to the steel substrate in the forsterite film, the better, and the Ti and Nb intensity peaks may overlap with the steel substrate surface. Further, the higher the B₈ value, the better, and there is no particular limitation as long as the value is industrially possible. About 1.980 T is an upper limit in industrial terms.

When one or both of the Ti and Nb intensity peaks are formed on the surface side of 1/2 thickness of the forsterite film, formation as precipitates at the grain boundaries and the like of forsterite itself is common, and a shape that exhibits an anchoring effect at the forsterite film and steel substrate interface is not formed. On the other hand, when formed on the steel substrate side, the intensity peaks correspond to a portion where the forsterite film and steel substrate have a convoluted shape, and precipitation occurs at the heterogeneous interface in that portion, thereby effectively precipitating the wedge shape between the forsterite and the steel substrate as described above, achieving the effect of the present disclosure.

Further, the peak position of the Nb intensity and the peak position of the Ti intensity are preferably close to each other with ±10 % precision, based on the forsterite film thickness.

When the peak of the Ti intensity is on the steel substrate side of 1/2 thickness of the forsterite film, and the peak position of the Nb intensity and the peak position of the Ti intensity are close to each other with ±10 % precision, based on the forsterite film thickness, almost all of the elements are in a state of compound precipitation, according to many SEM observation results. The compound precipitation state results in a more complex interface than when each element precipitates alone, which enhances the effect as wedges between the forsterite and the steel substrate as described above, and the effects of the present disclosure are more suitably achieved.

75 % or more of the total volume of the steel sheet is preferably occupied by crystals having a length of 25 mm or more parallel to the rolling direction.

When forsterite is formed, the grain boundaries of crystals on the steel substrate side also serve as sites where diffusion rate differs slightly, resulting in anchor-like shapes. Therefore, smaller crystal grain boundaries may appear to weaken the effect of the present disclosure. Further, although effective even with high grain boundary density, the effect is particularly pronounced with low grain boundary density.

Typically, when transformer iron cores are processed, bending is performed so that the direction orthogonal to the rolling direction forms a peak (or valley), and therefore the grain boundary density subject to the above effect is defined by the density in the rolling direction. It was observed that the effect tends to be particularly large for steel sheets in which crystal grain lengths parallel to the rolling direction are 25 mm or more. An upper limit of the length of the crystal grains parallel to the rolling direction is not particularly limited, but in industrial terms, the upper limit is about 150 mm.

According to the present disclosure, forsterite film thickness is defined by the intensity change of Mg, Si, or O, which is obtained by GDS analysis of the steel sheet. The forsterite takes a root-like structure or anchor in the steel substrate, and therefore the forsterite film thickness in practice corresponds to a thickness from a point where the Mg, Si, and O intensities rise sharply from 0 (noise base), that is, the forsterite film surface, to a point where the Mg, Si, and O intensities weaken sharply to the steel substrate base, that is, the steel substrate surface.

That is, when the peaks of the Nb intensity and the Ti intensity are on the steel substrate side of 1/2 thickness of the forsterite film, this means that for the forsterite film thickness corresponding to 50 [sec.], as in FIG. 2, GDS analysis is calculated from the surface of the film, and therefore the peaks of the Nb intensity and the Ti intensity are at 25 [sec.] or more.

Further, a state in which the peak position of the Nb intensity and the peak position of the Ti intensity are close to each other with ±10 % precision, based on the forsterite film thickness, means that the [sec.] difference between the peak position of the Nb intensity and the peak position of the Ti intensity, when the forsterite film difference is 50 [sec.] as described above, is ±10 % of 50 [sec.], or ±5 [sec.]

The following is a description of the method of production according to the present disclosure.

The steel slab adjusted to the preferred chemical composition range described above is subjected to hot rolling with or without reheating, to obtain a hot-rolled sheet. When the steel slab is subjected to reheating before hot rolling, the steel slab is preferably reheated to approximately 1000 °C or more and 1300 °C or less. Slab heating above 1300 °C is not effective for the present disclosure, according to which almost no inhibitor is contained in the steel at the slab stage, and increases costs. On the other hand, at temperatures less than 1000 °C, the rolling load becomes high and rolling becomes difficult.

Subsequently, the hot-rolled sheet is subjected to hot-rolled sheet annealing as required, and then cold rolled once or twice or more with intermediate annealing in between, to obtain a final cold-rolled sheet. The cold rolling may be performed at room temperature. Alternatively, the cold rolling may be warm rolling where rolling is performed with the steel sheet temperature raised to a temperature higher than room temperature, for example around 250 °C.

Thereafter, the final cold-rolled sheet is subjected to primary recrystallization annealing.

The purpose of the primary recrystallization annealing is primary recrystallization of the final cold-rolled sheet that has a rolled microstructure to adjust to an optimum primary recrystallized grain size for secondary recrystallization and to decarburize carbon contained in the steel by making the annealing atmosphere wet hydrogen nitrogen or wet hydrogen-argon atmosphere to form an oxide film on the surface of the final cold-rolled sheet. In order to do so, the annealing temperature of the primary recrystallization annealing is preferably approximately 800 °C or more and less than 950 °C. An oxide film formed during the primary recrystallization annealing reacts with MgO applied to the steel sheet in subsequent final annealing to form a forsterite film. Therefore, the morphology of the oxide film after the primary recrystallization annealing greatly affects the formation of forsterite film in subsequent processing.

Further, from the viewpoint of improving magnetic properties, when the primary recrystallization annealing is performed, increasing the heating rate of the heating process is effective. Specifically, the heating rate from 500 °C to 700 °C is 80 °C/s or more. The heating rate from 500 °C to 700 °C is preferably 100 °C/s or more. By controlling the heating rate, the texture after primary recrystallization can be improved, thereby effectively improving magnetic properties after secondary recrystallization. The higher the heating rate, the better, and therefore an upper limit is not particularly limited. An excessive heating rate may instead be disadvantageous in terms of cost, and therefore the upper limit for the heating rate is approximately 800 °C/s.

After the primary recrystallization annealing described above, an annealing separator is applied to the steel sheet surface. Magnesia (MgO) is used as the main agent of the annealing separator to form the forsterite film on the surface of the steel sheet after the subsequent final annealing. The formation of the forsterite film can be further favored by adding an appropriate amount of Ti oxides, Sr compounds, or the like to the separator. Here, "main agent" means that the agent is 50 mass% or more of the annealing separator.

In particular, Ti oxides are extremely important for the formation of sites for Nb and Ti precipitation at the steel substrate-forsterite film interface, and are preferably added in a range from 1.5 or more parts by mass to 10 or less parts by mass per 100 parts by mass of MgO.

This is followed by final annealing for secondary recrystallization and forsterite film formation.

In the heating process of the final annealing, at least 2 hours from 1050 °C to 1150 °C are at a heating rate of 10 °C/h or more in an atmosphere of H₂: 50 vol% or more (which may be 100 vol%).

Further, from 1100 °C to 1150 °C for 1 h or more (upper limit is not limited, but considering productivity, about 10 h or less), an atmosphere is used containing N₂ at 10 vol% or more (which may be 100 vol%), and the maximum arrival temperature (hereinafter also referred to as maximum temperature) is 1180 °C or more. Soaking treatment at the maximum arrival temperature is performed for 3 h or more (upper limit is not limited, but considering productivity, is about 50 h or less). An upper limit of the maximum arrival temperature is not particularly limited. Considering cost, about 1300 °C is preferred.

After the soaking treatment, a cooling process is performed. In the cooling process in a temperature range from 1100 °C or less to 900 °C or more is slow cooling at a cooling rate of 15 °C/h or less, for 5 h or more (an upper limit is not limited, but considering productivity, about 150 h or less) in an atmosphere containing N₂ at 50 vol% or more (which may be 100 vol%). The slow cooling of the cooling process preferably has a cooling rate of 5 °C/h or less and follows a pattern of additional soaking treatment, for example.

The conditions of the final annealing are extremely important.

First, the heating process from 1050 °C to 1150 °C in the final annealing is performed in an atmosphere containing H₂ at the heating rate of 10 °C/h or more for at least 2 h. During this process, the Ti oxide added in the annealing separator is reduced by H₂. Ti is reduced in a complex reaction with MgO, forming in part metallic Ti. When the duration of the reducing atmosphere is long, metallic Ti infiltrates into the steel and causes deterioration of magnetic properties. The heating rate is therefore 10 °C/h or more and the time in the reducing atmosphere is required to be short. However, when the heating rate exceeds 80 °C/h, the time required for secondary recrystallization and film formation is insufficient, and therefore the heating rate is preferably not increased in excess of 80 °C/h.

During the heating, from 1100 °C to 1150 °C, heat treatment is performed in an atmosphere containing N₂ at 10 vol% or more for at least 1 h. This fixes metallic Ti formed on the surface as TiN on the steel sheet surface. When the heat treatment time is shorter than 1 h or the N₂ concentration in the atmosphere is less than 10 vol%, TiN formation cannot be sufficiently achieved.

During the heat treatment in the atmosphere containing N₂, the forsterite film is formed, and a small amount of TiN is formed at a position of about 1/2 thickness of the forsterite film from the steel sheet side.

Further, it is essential that soaking be carried out for 3 h or more at the maximum temperature as a soaking treatment. The maximum temperature is preferably 1180 °C or more. More preferably, the maximum temperature is 1230 °C or more for 10 h or more. This will bring Ti and Nb present in the steel as precipitates into a solid solution state. When the soaking temperature is lower than the solute temperature of precipitates formed by Ti and Nb, or when the time is shorter than 3 h, the solid solution state is not achieved and a sufficient effect is not obtained.

After the soaking treatment, the cooling process is applied to cool the steel sheet.

At least once in the temperature range of 1100 °C or less and 900 °C or more in the cooling process, the cooling rate is slow cooling of 15 °C/h or less, and the slow cooling is performed for 5 h or more. As a result, Ti and Nb in a solid solution state are precipitated again with cooling. At this time, TiN on the steel sheet surface functions as precipitation nuclei for Ti and Nb, which can diffuse into TiN sites on the steel sheet surface by slow cooling under the conditions described above, precipitating on the steel substrate side of the steel substrate-forsterite film interface and acting as wedges between the forsterite and steel substrate. Further, making N₂ content in the atmosphere 50 vol% or more can promote the precipitation as nitrides of Ti and Nb diffused from the steel.

The additional soaking treatment is preferably carried out by adding a heat treatment of slow cooling at a cooling rate of 5 °C/h or less in the cooling process after the soaking treatment described above. The cooling rate of the additional soaking treatment may be 0 °C/h, which means a holding time of 5 h or more in the range of 1100 °C to 900 °C.

Slower coil cooling rates are typically undesirable from the viewpoint of productivity. However, the present disclosure actively implements slow cooling to achieve good film properties. The method of slow cooling is not particularly limited. Methods of slow cooling that do not utilize heating facilities such as burners, but rather circulate gas heated in an adjacent annealing furnace to suppress rapid cooling are efficient. Further, an effective method is to place an electric heater in a furnace hearth where coils are installed to control the cooling rate.

After the final annealing, an insulating coating may be further applied to the steel sheet surface and baked. Such an insulating coating is not limited to a particular type, and any conventionally known insulating coating is applicable. For example, a preferred method is described in JP S50-79442 A and JP S48-39338 A, where a coating solution containing phosphate-chromate-colloidal silica is applied on a steel sheet and then baked at a temperature of around 800 °C.

The final product thus obtained is the grain-oriented electrical steel sheet according to the present disclosure, as described above.

In order to improve the magnetic properties and the like, the grain-oriented electrical steel sheet may further contain, in mass%, at least one selected from the group consisting of Ni: 1.500 % or less, Sn: 0.50 % or less, Sb: 0.500 % or less, Zn: 0.5000 % or less, Co: 0.0100 % or less, Ga: 0.0050 % or less, Ge: 0.0050 % or less, Cu: 0.50 % or less, Mo: 0.50 % or less, P: 0.500 % or less, Cr: 1.50 % or less, B: 0.0050 % or less, and Bi: 0.0050 % or less.

Among the elements listed above, those for which no lower limit is specified are those for which there is no particular lower limit, and may be contained up to a lower limit of analysis, including 0 %. Further, other elements may be incorporated into the forsterite film or release into a gas phase may occur, depending on the final annealing conditions, and content in the steel may decrease, and therefore content in the steel may be less than the concentration in the slab, each in a range described above.

Further, in the method of production according to the present disclosure, anything not described herein may be a conventional method.

### EXAMPLES

As listed in Table 1, steel slabs having chemical compositions including a range of 3.20 % to 3.32 % of Si, less than 100 ppm of Al, and 50 ppm or less of each of N, S, O, and Se, with the balance being Fe and inevitable impurity, were each heated to 1230 °C then hot rolled to a thickness of 2.4 mm. Subsequently, hot-rolled sheet annealing was performed at 1020 °C for 80 s, then pickling, then cold rolling in a single pass to a thickness of 0.27 mm. Subsequently, primary recrystallization annealing was performed with an average heating rate of 150 °C/s from 500 °C to 700 °C then soaking at 830 °C for 2 min. The primary recrystallization annealing was performed in a wet atmosphere of 50 vol% hydrogen + 50 vol% nitrogen at a dew point of 55 °C, and decarburization was performed simultaneously.

The steel sheets thus obtained were each coated with an annealing separator made by adding TiO₂ to 100 parts by mass of MgO as listed in Table 1, subjected to final annealing under the conditions listed in Table 1, and cooled to room temperature. After the final annealing, unreacted separator was removed, and test pieces were cut from a central portion of the coil width of the outermost coils, and analyzed for the composition of the steel substrate and GDS analysis as described above. Further, an insulating coating consisting mainly of magnesium phosphate was applied and baked at 800 °C to obtain product sheets. The cooling rate during the cooling process from 1100 °C or less to 900 °C or more was kept constant.

From each such product sheet, after the final annealing, a test piece was taken from a position 1 m different in the longitudinal direction of the coil from the position where the previous test piece was taken, and magnetic flux density B₈ was measured and film adhesion was evaluated. The film adhesion was evaluated based on the bending separation diameter (the smallest bending diameter at which the film does not separate when the steel sheet is coiled around a round bar).

Measurements of compositional analysis and GDS analysis of the obtained steel substrate and the results of the film separation evaluation are listed in Table 2. The film separation evaluation followed the procedure described in PTL 2.

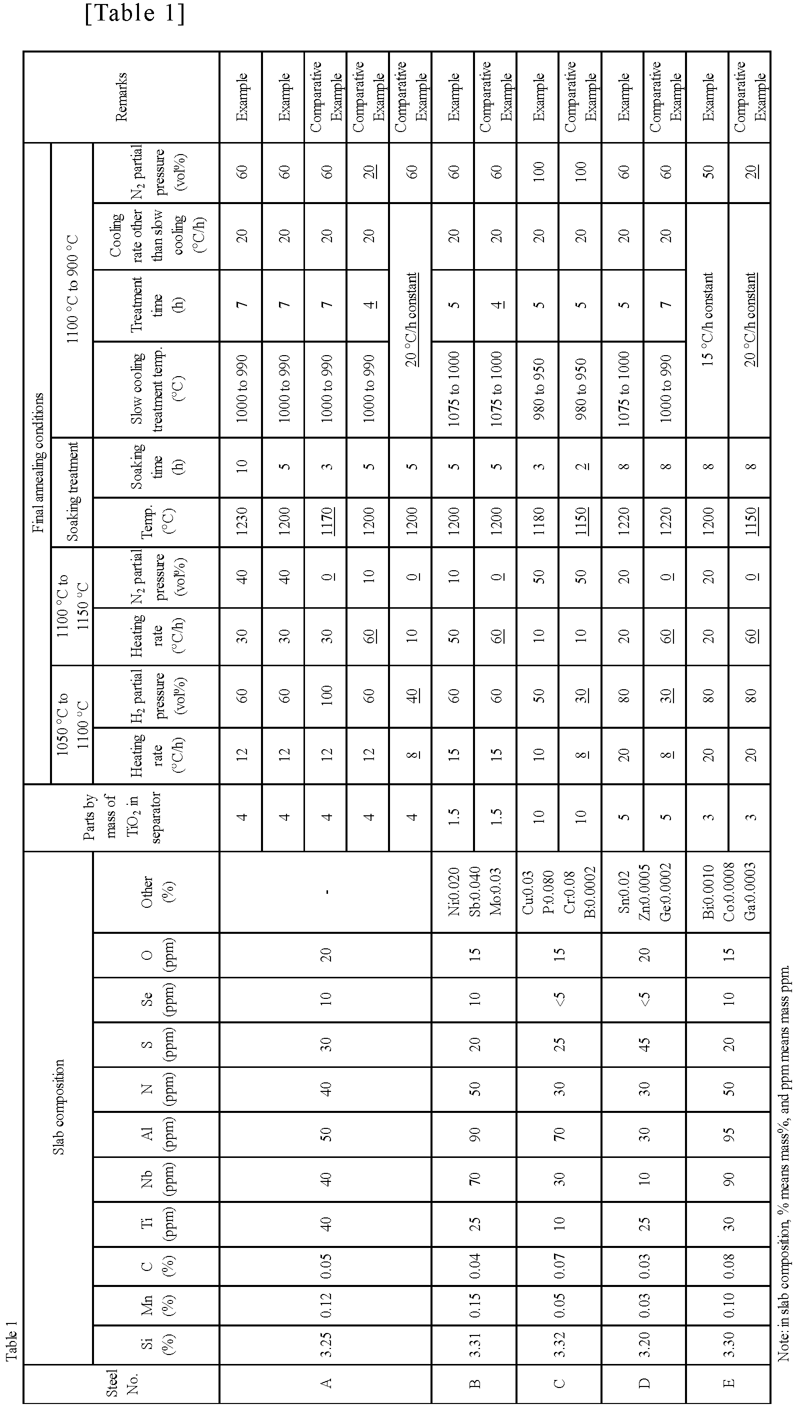

### [Table 2]

**Table 2**

| Steel No. | Final annealing | | | | | | | | | | | | | | After insulating coating formation | | Remarks |
|---|---|---|---|---|---|---|---|---|---|---|---|---|---|---|---|---|---|
| | Steel substrate composition | | | | | | | | | | | GDS analysis (sec.) | | | Magnetic flux density | Coating adhesion | |
| | Si (%) | Mn (%) | C (ppm) | Ti (ppm) | Nb (ppm) | Al (ppm) | N (ppm) | S (ppm) | Se (ppm) | O (ppm) | Other (%) | Ti peak position | Nb peak position | Mg, O, Si steel substrate base position | B₈ (T) | Bending separation diameter (mm) | |
| A | 3.25 | 0.12 | 15 | 15 | 10 | 5 | 7 | <5 | <5 | 20 | - | 36 | 35 | 55 | 1.915 | 10 | Example |
| | 324 | 0.12 | 20 | 25 | 20 | 15 | 15 | 10 | <5 | 20 | | 36 | 35 | 55 | 1.913 | 10 | Example |
| | 325 | 0.12 | 20 | 40 | 35 | 40 | 25 | 15 | <5 | 20 | | 20 | - | 45 | 1.898 | 35 | Comparative Example |
| | 3.23 | 0.12 | 20 | 30 | 35 | 15 | 15 | 10 | <5 | 20 | | - | - | 45 | 1.899 | 35 | Comparative Example |
| | 3.25 | 0.12 | 20 | 40 | 40 | 15 | 15 | 10 | <5 | 20 | | - | - | 60 | 1.908 | 35 | Comparative Example |
| B | 3.31 | 0.15 | 10 | 15 | 30 | 20 | 15 | <5 | <5 | 15 | Ni:0.020 Sb:0.035 Mo:0.03 | 36 | 35 | 60 | 1.918 | 10 | Example |
| | 3.31 | 0.15 | 10 | 25 | 70 | 20 | 15 | <5 | <5 | 15 | Ni:0.020 Sb:0.035 Mo:0.03 | - | - | 60 | 1.913 | 30 | Comparative Example |
| C | 3.32 | 0.05 | 15 | 10 | 20 | 25 | 10 | 10 | <5 | 15 | Cu:0.03 P:0.080 Cr:0.08 B:0.0001 | 31 | 30 | 55 | 1.921 | 10 | Example |
| | 3.32 | 0.05 | 15 | 35 | 30 | 45 | 15 | 15 | <5 | 15 | Cu:0.03 P:0.080 Cr:0.08 B:0.0002 | - | - | 55 | 1.913 | 35 | Comparative Example |
| D | 3.20 | 0.03 | 15 | 15 | <5 | 5 | <5 | <5 | <5 | 20 | Sn:0.02 Zn:0.0005 Ge:0.0002 | 40 | 36 | 65 | 1.917 | 15 | Example |
| | 3.21 | 0.03 | 15 | 30 | 10 | 5 | <5 | <5 | <5 | 20 | Sn:0.02 Zn:0.0005 Ge:0.0002 | - | - | 65 | 1.913 | 35 | Comparative Example |
| E | 3.30 | 0.10 | 10 | 25 | 25 | 10 | 15 | <5 | 10 | 15 | Bi:0.0005 Co:0.0008 Ga:0.0003 | 38 | 36 | 55 | 1.916 | 15 | Example |
| | 3.30 | 0.10 | 10 | 30 | 90 | 45 | 20 | 10 | 10 | 15 | Bi:0.0010 Co:0.0008 Ga:0.0003 | - | - | 55 | 1.913 | 40 | Comparative Example |

| | | | | | | | | | | | | | | | | | |
|---|---|---|---|---|---|---|---|---|---|---|---|---|---|---|---|---|---|
| Note: in steel substrate composition, % means mass%, ppm means mass ppm, and the balance is Fe and inevitable impurity. | | | | | | | | | | | | | | | | | |

As listed in Tables 1 and 2, it can be seen that good grain-oriented electrical steel sheets having a magnetic flux density B₈ of 1.900 T or more and a bending diameter of 15 mm or less in terms of film properties can be stably obtained according to the present disclosure.

## Claims

1. A grain-oriented electrical steel sheet comprising a steel substrate and a forsterite film, wherein the steel substrate has a chemical composition comprising, in mass%, C: 0.005 % or less, Si: 2.00 % to 4.50 %, and Mn: 0.01 % to 0.50 %, less than 50 mass ppm of each of Se and O, less than 30 mass ppm of S, 10 mass ppm or more and less than 60 mass ppm of acid soluble Al, and 30 mass ppm or less of either or each of Nb and Ti, with the balance being Fe and inevitable impurity, the steel sheet has a magnetic flux density B₈ of 1.900 T or more, and peaks of one or both of Ti intensity and Nb intensity according to GDS analysis are on a steel substrate side of a 1/2 position of thickness of the forsterite film.

2. A grain-oriented electrical steel sheet comprising a steel substrate and a forsterite film, wherein the steel substrate has a chemical composition comprising, in mass%, C: 0.005 % or less, Si: 2.00 % to 4.50 %, and Mn: 0.01 % to 0.50 %, less than 50 mass ppm of each of Se and O, less than 30 mass ppm of S, 10 mass ppm or more and less than 60 mass ppm of acid soluble Al, and 30 mass ppm or less of each of Nb and Ti, with the balance being Fe and inevitable impurity, the steel sheet has a magnetic flux density B₈ of 1.900 T or more, peaks of Ti intensity and Nb intensity according to GDS analysis are on a steel substrate side of a 1/2 position of thickness of the forsterite film, and the peak position of the Ti intensity and the peak position of the Nb intensity are close to each other with ±10 % precision, based on forsterite film thickness.

3. The grain-oriented electrical steel sheet according to claim 1 or 2, wherein
the chemical composition further contains, in mass%, at least one selected from the group consisting of Ni: 1.500 % or less, Sn: 0.50 % or less, Sb: 0.500 % or less, Zn: 0.5000 % or less, Co: 0.0100 % or less, Ga: 0.0050 % or less, Ge: 0.0050 % or less, Cu: 0.50 % or less, Mo: 0.50 % or less, P: 0.500 % or less, Cr: 1.50 % or less, B: 0.0050 % or less, and Bi: 0.0050 % or less.

4. A method of producing the grain-oriented electrical steel sheet as recited in claim 1, the method comprising:
casting a steel slab from molten steel, the steel slab having a chemical composition comprising, in mass%, C: 0.08 % or less, Si: 2.00 % to 4.50 %, and Mn: 0.01 % to 0.50 %, and, in mass ppm, either or each of Ti and Nb: 10 ppm or more and less than 150 ppm, each of O and Se: less than 50 ppm, S: 10 ppm or more and less than 50 ppm, acid soluble Al: 20 ppm or more and less than 100 ppm, and N: 20 ppm or more and 80 ppm or less, with the balance being Fe and inevitable impurity; hot rolling the steel slab to obtain a hot-rolled sheet; then annealing and rolling to a final sheet thickness to obtain a cold-rolled sheet; then primary recrystallization annealing; then further final annealing; followed by forming an insulating coating, wherein
the final annealing has a maximum temperature of 1180 °C or more and includes a final annealing process and a cooling process, and in the final annealing process, at least 2 h from 1050 °C to 1150 °C is carried out in an atmosphere of H₂: 50 vol% or more at a heating rate of 10 °C/h or more, and at least 1 h from 1100 °C to 1150 °C is carried out in an atmosphere of N₂: 10 vol% or more, followed by soaking treatment at the maximum temperature for 3 h or more, and at least once in the cooling process in a temperature range of 1100 °C or less to 900 °C or more, slow cooling is carried out at a cooling rate of 15 °C/h or less for 5 h or more in an atmosphere of N₂: 50 vol% or more.

5. A method of producing the grain-oriented electrical steel sheet as recited in claim 2, the method comprising:
casting a steel slab from molten steel, the steel slab having a chemical composition comprising, in mass%, C: 0.08 % or less, Si: 2.00 % to 4.50 %, and Mn: 0.01 % to 0.50 %, and, in mass ppm, each of Ti and Nb: 10 ppm or more and less than 150 ppm, each of O and Se: less than 50 ppm, S: 10 ppm or more and less than 50 ppm, acid soluble Al: 20 ppm or more and less than 100 ppm, and N: 20 ppm or more and 80 ppm or less, with the balance being Fe and inevitable impurity; hot rolling the steel slab to obtain a hot-rolled sheet; then annealing and rolling to a final sheet thickness to obtain a cold-rolled sheet; then primary recrystallization annealing; then further final annealing; followed by forming an insulating coating, wherein
the final annealing has a maximum temperature of 1180 °C or more and includes a final annealing process and a cooling process, and in the final annealing process, at least 2 h from 1050 °C to 1150 °C is carried out in an atmosphere of H₂: 50 vol% or more at a heating rate of 10 °C/h or more, and at least 1 h from 1100 °C to 1150 °C is carried out in an atmosphere of N₂: 10 vol% or more, followed by soaking treatment at the maximum temperature for 3 h or more, and at least once in the cooling process in a temperature range of 1100 °C or less to 900 °C or more, slow cooling is carried out at a cooling rate of 15 °C/h or less for 5 h or more in an atmosphere of N₂: 50 vol% or more.

6. The method according to claim 4 or 5 of producing the grain-oriented electrical steel sheet as recited in claim 3, wherein the chemical composition of the steel slab as recited in claim 4 or 5 further contains, in mass%, at least one selected from the group consisting of
Ni: 0.005 % to 1.500 %, Sn: 0.01 % to 0.50 %, Sb: 0.005 % to 0.500 %, Zn: 0.0001 % to 0.5000 %, Co: 0.0001 % to 0.0100 %, Ga: 0.0001 % to 0.0050 %, Ge: 0.0001 % to 0.0050 %, Cu: 0.01 % to 0.50 %, Mo: 0.01 % to 0.50%, P: 0.005 % to 0.500 %, Cr: 0.01 % to 1.50 %, B: 0.0001 % to 0.0050 %, and Bi: 0.0001 % to 0.0050 %.

7. The method according to any one of claims 4 to 6, of producing the grain-oriented electrical steel sheet, wherein additional soaking treatment at a cooling rate of 5 °C/h or less is performed in an atmosphere of N₂: 50 vol% or more in the temperature range of 1100 °C or less to 900 °C or more in the cooling process.
